Europäisches Patentamt

European Patent Office

Office européen des brevets

(11) Publication number: **0 448 089 A2**

# EUROPEAN PATENT APPLICATION

(21) Application number: 91104370.1

(51) Int. Cl.5: **G01N 21/59**

(22) Date of filing: **20.03.91**

(30) Priority: **22.03.90 IT 1977990**

(43) Date of publication of application:
**25.09.91 Bulletin 91/39**

(84) Designated Contracting States:
**AT BE CH DE DK ES FR GB GR LI NL SE**

(71) Applicant: **ISTITUTO GUIDO DONEGANI S.p.A.**
**4, Via Fauser**
**I-28100 Novara(IT)**

(72) Inventor: **Triulzi, Giangaleazzo**
**15, Via L. Spallanzani**
**I-20129 Milan(IT)**
Inventor: **Cinquina, Patrizia**
**289, Viale G. Cesare**
**I-28100 Novara(IT)**
Inventor: **'Rolay, Mustafa**
**2, Via Ravenna**
**I-28100 Novara(IT)**

(74) Representative: **Gudel, Diether, Dr. et al**
**Patentanwälte Dipl.-Ing. G. Dannenberg Dr.**
**P. Weinhold Dr. D. Gudel Dipl.-Ing. S.**
**Schubert Dr. P. Barz Grosse Eschenheimer**
**Strasse 39**
**W-6000 Frankfurt am Main 1(DE)**

(54) Optical probe to determine the turbidity of a solution by immersion.

(57) Optical probe for determining the turbidity of a solution, including:

a. an essentially cylindrical probe for immersion with a calibrated water-tight slit near one of its ends, in which two overlapping lenses have been inserted;

b. suitable equipment for the emission of a coherent monochromatic beam of light;

c. suitable equipment for directing the light-beam into the probe following a parallel course of descent and ascent, and

d. suitable equipment for magnifying and comparing the light-beam coming from the probe to a similar reference beam having a constant intensity.

EP 0 448 089 A2

The present invention concerns an optical probe to determine the turbidity of a solution by immersion.

Up until now, it has not been possible to automatically determine the turbidity of a liquid, for example a solution, as there do not seem to be any instruments which are able to make a continuous measurement of this kind.

At the present moment, it is possible to verify variations in the transparency of a solution

or identify the dilution of a solute in a solvent or, viceversa, a phase separation of a solute and solvent in a solution, only by stopping the plant and by a simple visible inspection of the state of the solution.

The Applicant has now discovered a device for determining the turbidity of a liquid phase which, by operating automatically, allows the state of the solution to be continuously detected without stopping the plant.

The present invention consequently concerns an optical probe for determining the turbidity of a solution, which includes:

a. in essentially cylindrical probe for immersion with a calibrated water-tight slit near one of its ends, in which two overlapping lenses heve been inserted;

b. suitable equipment for the emission of a coherent monochromatic beam of light;

c. suitable equipment for directing the light-beam into the probe following a parallel course of descent and ascent; and

d. suitable equipment for magnifying the light-beam coming from the probe and comparing it to a similar reference beam having a constant intensity.

The probe for immersion, basically but not necessarily cylindrical, is usually composed of a stainless steel cylinder, externally coated with protective material, for example polytetrafluoroethylene, in which the calibrated slit is situated near the end which is immersed in the liquid.

The probe is consequently able to resist possible corrosive action by the solvent and to operate within a temperature range of between -20 and 200°C.

The overlapping water-tight lenses are preferably made up of two quartz plates completely transparent and having a constant thickness.

A device suitable for the emission of a coherent light-beam, as described in the present invention, may consist of a solid-state laser diode which emits a light with a wave-lenght of preferably 670 nm and is equipped with an electronic control system for the power supply.

Equipment suitable for directing the light-beam inside the probe, following the two courses of descent and ascent, includes a beam splitter situated near the end of the probe which is not immersed, in such a way as to receive the light-beam coming from the laser source, together with an optical reflecting device or corner cube situated at the other end of the probe immediately under the calibrated slit. This device enables the light-beam to pass through both lenses during both its descent and ascent.

Alternative equipment for directing the light-beam inside the probe in both directions may consist of an optical fibre system combined with the optical reflecting device. For example, the light-beam emitted from the laser is continuously transmitted by the optical fibre to the inlet of the optical reflecting device; at the outlet it returns to the optical fibre and is transmitted to the lower of the two lenses. The light-beam passes freely through the solution which is in the slit of the probe, returns again to the optical fibre after passing through the upper lens and is finally continuously transmitted to the reference system mentioned in paragraph (d) above. Suitable optical equipment, well known to experts in the field, situated on the corner cube and on the lenses, allows the control of the light-beam at each exit from and entrance into the fibre.

With the optical fibre system, the light-beam passes through both lenses only once, either in its re-ascent as previously described or during its descent. This optical fibre system is preferred, in the measuring device described in the present invention, when the probe is immersed in a liquid subject to temperature changes, possibly causing deformations which could effect its operation.

The light-beam, after its descent and ascent inside the probe, is transmitted to a reference system which includes suitable equipment for magnifying and comparing the light-beam to a similar reference beam having a constant intensity. In particular, this reference system includes at least one photosensor at least one I/V converter and a differential amplifier which generates the output signal. The differential amplifier may be equipped with a manual or automatic zero-reference signal.

The structural and functional characteristics of the optical probe for immersion as described in the present invention, can be better understood from the detailed description which follows and in which reference is made to the enclosed drawings which schematically represent the above as an example but without limiting it in any way, in which:

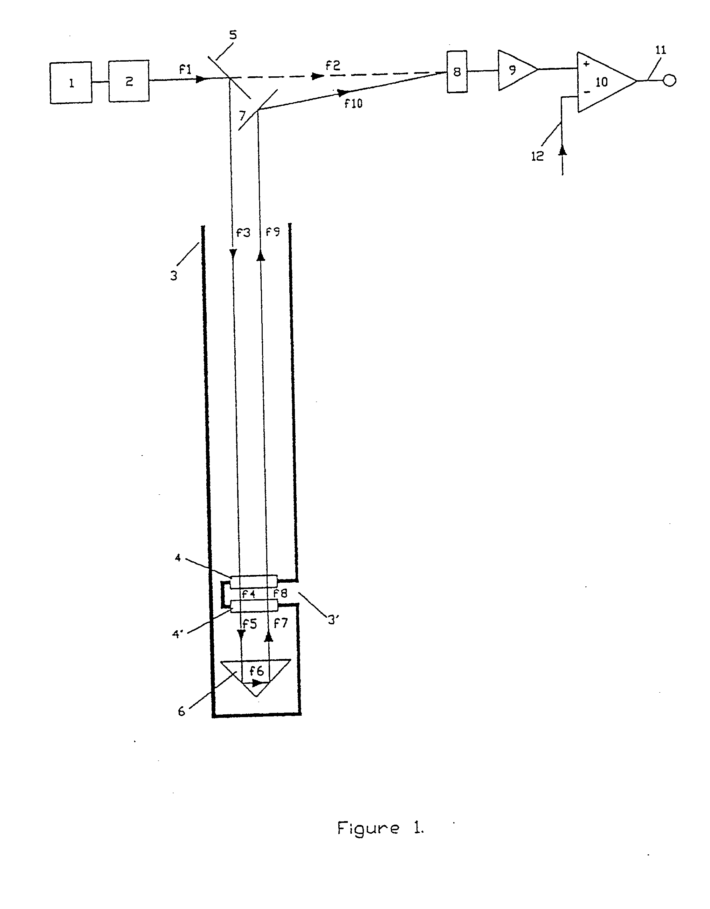

Figure 1 shows an optical probe, object of the present invention, in which the reference system is equipped with a manual zero-reference signal; and

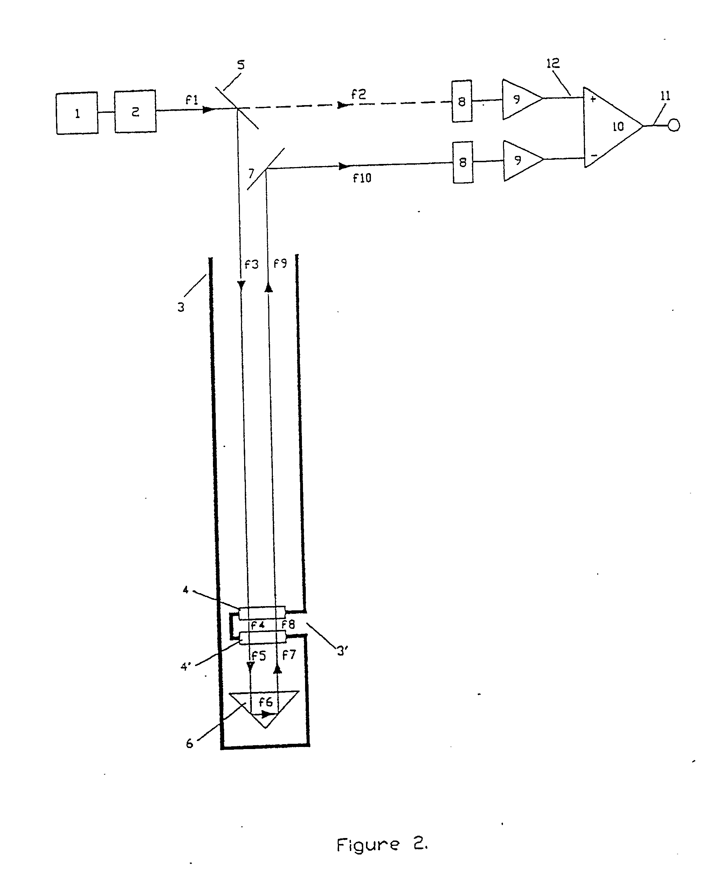

Figure 2 shows an optical probe, object of the present invention, in which the reference system is equipped with an automatic zero-reference signal.

As shown in the figures, the optical probe for immersion includes a solid-state laser operating system (1), a solid-state laser (2), a cylindrical probe (3) equipped with a slit (3') near one of its ends, in which two overlapping water-tight lenses (4 and 4') have been inserted.

The optical probe also includes a beam-splitter (5), an optical corner cube (6), a reflecting device (7), photosensor (8), I/V converters (9) and a differential amplifier (10) which generates the output signal (11) and which receives a reference signal (12). The $f_i$ indexes, with i ranging from 1 to 10, represent the course of the light-beam emitted by the laser (2).

The above description and enclosed drawings adequately demonstrate the functioning of the optical probe object of the present invention.

The probe (3) is immersed in the solution, where turbidity or variation of turbidity over a certain period of time are to be measured, in such a way that the slit (3') is fully covered by the liquid. The light-beam ($f_1$) emitted by the laser (2) is directed against the beam splitter (5) which divides it into two beams: the first beam ($f_2$) follows the original direction and reaches the reference system, whereas the second beam ($f_3$) is diverted along the probe.

During its descent into the probe the light-beam passes through the first lens (4), through the solution present in the slit (3') and finally through the second lens (4').

As the beam comes out ($f_5$), it is reflected at the bottom of the probe and consequently ascends the probe.

In this second part of the course, the light-beam passes through the lens (4'), again through the solution present in the slit (3') and finally through the second lens (4). The higher the turbidity of the solution being tested, the lesser will be the intensity of the light-beam as it comes out ($f_9$), when it is diverted by the reflecting device (7) and reaches the reference system as light-beam $f_{10}$.

If the reference system has a manual zero-reference signal, beams $f_2$ and $f_{10}$ meet again in the photosensor (8), are transmitted to the I/V converted (9) and then to the differential amplifier (10) where the reference signal (12) also arrives. The differential amplifier (10) generates the output signal (11) which indicates the degree of turbidity of the solution.

If the reference system has an automatic zero-reference signal, beams $f_2$ and $f_{10}$ arrive separately at the differential amplifier (10) through the photosensors (8) and the I/V converters (9), beam $f_2$ acting as a reference beam (12) and beam $f_{10}$ as a measurement beam.

When the present invention is put into practical use, the various parts of the optical probe for immersion, shown in the enclosed drawings as an example, may undergo changes or modifications which are, however, fully coherent with the present invention and still under the protection given by this patent.

## Claims

1. Optical probe for determining the turbidity of a solution, including:

    a. an essentially cylindrical probe for immersion with a calibrated water-tight slit near one of its ends, in which two overlapping lenses have been inserted;

    b. suitable equipment for the emission of a coherent monochromatic beam of light;

    c. suitable equipment for directing the light-beam into the probe following a parallel course of descent and ascent; and

    d. suitable equipment for amplifying and comparing the light-beam coming from the probe to a similar reference beam having a constant intensity.

2. Optical probe according to Claim 1, wherein the overlapping water-tight lenses are composed of two quartz plates completely transparent and having a constant thickness.

3. Optical probe according to Claims 1 and 2, wherein suitable equipment for the emission of a coherent light-beam consists of a solid-stare laser diode which emits a light with a wavelength of 670 nm.

4. Optical probe according to any of the above Claims, wherein suitable equipment, for directing the light-beam into the probe following the two parallel courses of descent and ascent, includes a beam splitter situated near the end of the probe which is not immersed, together with an optical reflecting device or corner cube situated at the other end of the probe immediately under the calibrated slit.

5. Optical probe according to any of Claims 1 to 3, wherein suitable equipment, for directing the light-beam inside the probe in both directions, may consist of an optical fibre system combined with the optical reflecting device.

6. Optical probe according to any of the above Claims, wherein suitable equipment, for magnifying and comparing the light-beam coming from the probe, includes at least one photosensor, at least one I/V converter and a differential amplifier which generates the output

7. Optical sensor according to Claim 6, wherein the differential amplifier is equipped with a manual or automatic zero-reference signal.

Figure 1.

Figure 2.